# EUROPEAN PATENT SPECIFICATION

(11) **EP 4 508 969 B1**
(45) Date of publication and mention of the grant of the patent: **04.11.2026**
(21) Application number: 24181886.3
(22) Date of filing: 13.06.2024
(51) Int. Cl.: A01D 41/127, A01D 43/08, A01D 45/00, G06V 20/10

(54) **CROP MONITORING**
ÜBERWACHUNG VON ERNTEGUT
SURVEILLANCE DE RÉCOLTE

(30) Priority: 17.08.2023 US 202363520201 P
(43) Date of publication of application: 19.02.2025
(73) Proprietor: Agco Corporation, Duluth, Georgia 30096 (US)
(72) Inventor: GOOD, Grant Lewis, Hesston, 67062 (US)
(74) Representative: AGCO Intellectual Property Department

(56) References cited:
- WO-A1-2020/167934
- WO-A9-2021/242694
- US-A1- 2020 327 326
- US-A1- 2021 209 747

## Description

### FIELD

Embodiments of the present disclosure relate generally to systems and methods for monitoring crop maturity, and control systems for taking appropriate actions based thereon.

### BACKGROUND

Typically, harvesting decisions - e.g. when and where to cut a given crop - are taken manually by a farmer based on prior knowledge and visual inspection of the growing crop material. A farmer may include in this knowledge or predictions for prevailing and future weather conditions and adapt a harvesting plan accordingly. However, this is time and labor intensive and there are therefore opportunities to improve efficiency in this process.

Many agricultural machines are now incorporating vision systems onto the machines to aid an operator, and ultimately to be able to control operation of the machine in an automated manner. It would be advantageous to further utilise such setups, e.g. to achieve the potential efficiency improvements discussed herein.

It is an aim of embodiments of the present disclosure to improve upon known systems for monitoring crop growth and/or controlling a harvesting operation based thereon.

Control systems are e.g. known from US 2020/327326 A1, US 2021/209747 A1, WO 2021/242694 A9 and WO 2020/167934 A1.

### BRIEF SUMMARY

According to the invention there is provided a control system for determining a degree of maturity of crop material to be harvested in a working environment, the control system comprising one or more controllers, and being configured to: receive image data from one or more image sensors; analyse the image data to: identify one or more crop components within the image data; and determine a crop maturity metric in dependence on the identified one or more crop components, the crop maturity metric comprising a measure indicative of a bloom percentage of the crop material; and generate and output one or more control signals for controlling operation of one or more operable components associated with a harvesting of the crop material.

Advantageously, the present disclosure provides a control system operable to utilise image data for determining a crop maturity metric, specifically indicative of a bloom percentage, for controlling operable components associated with the harvesting of that crop material. Accordingly, a decision can be taken, and optionally a harvesting operation automated accounting for the crop maturity which, for example, to optimize crop yield and/or quality.

The one or more image sensors may be provided on a machine or vehicle operating in the working environment. For example, in embodiments, the one or more image sensors are mounted or otherwise coupled, in use, to an agricultural machine operating in the working environment. Additionally or alternatively, the one or more image sensors may be mounted or otherwise coupled, in use, to an unmanned aerial vehicle operable, in use, to obtain image data indicative of the working environment and the crop material therein.

The one or more image sensors may be provided on a portable user device, such as a smartphone or tablet computer, for example. In such embodiments, the image data may be obtained, in use, by an operator obtaining one or more images utilising (e.g. carrying) the portable user device within the working environment.

According to the invention, the one or more controllers are configured to compare the determined crop maturity metric with a threshold maturity metric. According to the invention, the one or more controllers are configured to generate and output the one or more control signals in dependence on the comparison. The threshold maturity metric comprises a threshold bloom percentage. For example, for crop material comprising alfalfa, the threshold bloom percentage may be set at or around 10%.

The one or more controllers may be configured to initiate control of the one or more operable components in dependence on the determined crop maturity metric. This may include initiating control of the component(s) in dependence on the determined crop maturity metric meeting or exceeding threshold maturity metric. The one or more controllers may be configured to prevent control of the one or more operable components in dependence on the determined crop maturity metric. This may include preventing control of the component(s) in dependence on the determined crop material metric not meeting the threshold maturity metric.

The one or more operable components may comprise a user interface. In such embodiments, the one or more controllers may be configured to control operation of the user interface in dependence on the determined crop maturity metric. This may include controlling the generation of a graphical representation of the determined maturity metric for display by the user interface. The user interface may comprise a display screen, which may be provided as part of a user terminal of an agricultural machine, e.g. in an operator cab of a machine. Additionally or alternatively, the user interface may be provided by a portable user device, e.g. one carried by a user/operator during operating in the working environment, or whilst planning an operation for the working environment. The portable user device may comprise a smartphone, tablet computer, laptop or the like.

The one or more operable components may comprise a computing system having stored thereon, or providing access to, an operational planning tool for the harvesting operation. The one or more controllers may be configured to generate and/or update an operational plan for the harvesting operation in dependence on the determined crop maturity metric. The operational plan may comprise a schedule for performance of one or more operational tasks associated with the harvesting operation associated with the crop. The operational plan may comprise a recommended timing for performance of the one or more operational tasks. The operational plan may comprise one or more suggested operational parameters for the harvesting operation, for example, suggested operational parameters for a harvesting operation, including operational speeds, wayline/path planning, processor settings for adapting a processing intensity applied during the harvesting operation to the crop material, etc.

The one or more controllers may be configured to update a crop growth model in dependence on the determined crop maturity metric. The growth model may incorporate one or more additional crop metrics. The one or more additional metrics may include a calculation of a growing degree unit of the crop material.

The one or more controllers may be configured to apply an image recognition process for identifying the one or more crop components in the image data. The image recognition process may comprise a machine learned method trained on a training dataset with test images which include crop components equivalent to crop components in the crop material to be harvested.

The one or more controllers may collectively comprise an input (e.g. an electronic input) for receiving one or more input signals. The one or more input signals may comprise image data from the one or more image sensors. The one or more controllers may collectively comprise one or more processors (e.g. electronic processors) operable to execute computer readable instructions for controlling operation of the control system, for example, to determine the crop maturity metric. The one or more processors may be operable to generate one or more control signals for controlling operation of the one or more operational components. The one or more controllers may collectively comprise an output (e.g. an electronic output) for outputting the one or more control signals.

A further aspect provides an agricultural machine comprising a control system as described herein.

The invention also provides a computer implemented method of determining a degree of maturity of crop material to be harvested, according to claim 13.

An example, not forming part of the present invention provides computer software comprising computer readable instructions which, when executed by one or more electronic processors, causes performance of a method in accordance with any aspect described herein.

An example, not forming part of the present invention provides a computer readable medium having the computer software of the preceding aspect of the invention stored thereon.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 illustrates an example distributed system embodying aspects of the present disclosure;
FIG. 2 is a schematic illustration of a control system of the present disclosure; and
FIG. 3 illustrates an alternative system embodying further aspects of the present disclosure.

### DETAILED DESCRIPTION

The present disclosure relates to systems and methods for determining a degree of maturity of crop material to be harvested in a working environment. Image data is obtained from one or more image sensors, here a camera 80 mounted or otherwise operably coupled to an agricultural machine, here a tractor 10, operating within the working environment. Controller(s) 102 is configured to analyse the image data to identify one or more crop components within the image data. Once identified, a crop maturity metric can be determined in dependence on the identified one or more crop components, with the crop maturity metric comprising a measure indicative of a bloom percentage of the crop material. As discussed herein, the bloom percentage can be used as an indicator of the readiness of the crop material for harvesting, or for performing other related agricultural operations. Operation of one or more operable components associated with a harvesting of the crop material is then controlled, by the controller(s) 102, based on the crop maturity metric. As discussed herein, this may include controlling operation of a user interface, e.g. a display terminal 86, or a communication module or communicating with a remote data store 84 and associated control unit for determining and/or updating an operational plan for the working environment.

### System

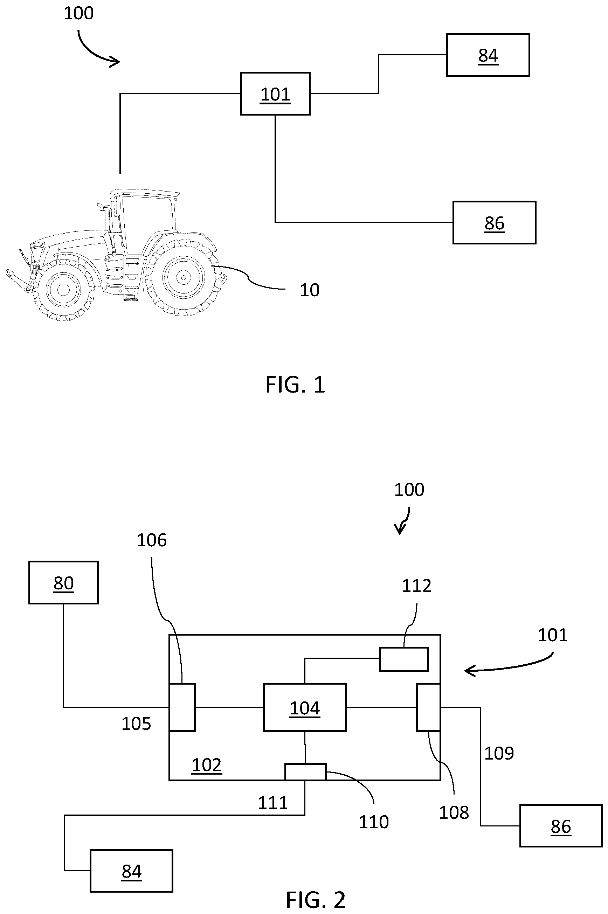

An example system 100 is shown in FIGs. 1 and 2. Here, a distributed system 100 comprises a central control system 101 (described in detail below) which is in operable communication with the tractor 10 operating within the working environment, e.g. whilst performing a spraying operation for the crop material. A camera system 80 is mounted or otherwise coupled to the tractor 10 and is configured to obtain image data as the tractor 10 traverses the environment. The image data includes images of crop material within the working environment which is analysed (in the manner discussed hereinbelow) by the controller system 101. The system 100 further includes both a user interface 86, here provided on a portable electronic device for an operator, and a remote data store 84 for receiving and/or storing data from the control system 101, which may include the image data for example. Again, as discussed herein, the remote data store 84 may further comprise stored thereon an operational plan for the working environment, which may be generated and/or updated through communication with the control system 101 and specifically in dependence on the crop maturity metric determined by the control system 101.

The control system 101 is shown here as remote from both the tractor 10 and the remote data store 84. However, it will be appreciated that the control system 101, or indeed controller(s) 102 thereof may be provided on the tractor, e.g. as one or more processors of the tractor 10, or as a remote processing capability, e.g. associated with the remote data store 84 and/or as one or more controllers/processors of the remote user device.

### Control system and Method

FIG. 2 illustrates control system 101 further. The control system 101 comprises a controller 102 which includes an electronic processor 104, an electronic input 106 and electronic outputs 108, 110. The processor 104 is operable to access a memory 112 of the controller 102 and execute instructions stored therein to perform the steps and functionality of the present invention, for example to output control signals 109, 111, via the outputs 108, 110, for controlling operation of operable components, including the user interface 86 or for communication with the remote data store 86.

The processor 104 is operable to receive sensor data via input 106 which, in the illustrated embodiment, takes the form of input signals 105 received from camera system 80 which, as described herein is mounted or otherwise coupled to tractor 10 operating within the working environment. The sensor data here is provided as image data from the camera system 80. The processor 104 is operable to analyse the image data to firstly identify one or more crop components and then determine a crop maturity metric therefrom, in the manner discussed herein. Specifically, the processor 104 is configured to identify one or more crop material components in the image data, e.g. through performance of an object recognition process to identify specific components of the crop - e.g. stem, leaves, buds, etc. The crop maturity metric can then be extracted for the identified crop material component(s). Here, this comprises a measure of a bloom percentage for the crop material.

Bloom percentage may be calculated as a ratio of open flowers to unopen buds in the image data. Here, the object recognition process may identify crop components including open flowers and unopen buds, determine a count thereof for a data set (e.g. from a single image or an average across multiple images obtained of the crop) and determine the bloom percentage therefrom.

The crop maturity metric is utilised here to control operable components associated with the harvesting of the crop material.

In the illustrated examples, output 110 is operably coupled to remote data store 86. The control system 101 is configured to communicate with the remote data store 86, e.g. to update an operational plan for the working environment based on the determined crop maturity metric. The operational plan can include a schedule for performance of one or more operational tasks associated with the harvesting operation associated with the crop, and through communication with the data store 86 the control system 101 is operable to update the plan based on the bloom percentage of the crop material in the working environment, for example. The operational plan can include a recommended timing for performance of the one or more operational tasks. Where the determined crop maturity metric indicates that the crop has not matured to a sufficient level, e.g. to perform harvesting of that crop, the operational plan may be updated to delay the recommended timing for the harvesting operation. Alternatively, where the crop maturity metric indicates that the crop is at a stage where harvesting may be most or more efficient, e.g. from a yield and/or quality consideration, the operational plan may be updated to bring forward the harvesting recommendation.

As discussed herein, the crop maturity metric is indicative of a bloom percentage of the crop material. Accordingly, the control system 101 can be configured to compare the determined metric with a threshold bloom percentage, and control updating of the operational plan generated by an operational planning tool in dependence thereon. The threshold bloom percentage may be predetermined, and set at a level, for example, providing the best trade off between quality and yield for the crop material. This may be definable by an operator based on prior experience or desire for the crop material. Where the crop material is alfalfa, the bloom percentage threshold may be set at or around 10%, for example.

In yet further variants, the operational plan may comprise one or more suggested operational parameters for the harvesting operation, for example, suggested operational parameters for a harvesting operation, including operational speeds, wayline/path planning, processor settings for adapting a processing intensity applied during the harvesting operation to the crop material, etc. This may be important, for example, where it is determined that crop material in one area of the working environment is ready (i.e. at the right stage of maturity) to be harvested. The operational plan may therefore split the working environment / recommendation for the timing of the harvesting operation based on this information.

In yet further embodiments, the data store 86 may store a crop growth model which may be updated in dependence on the determined crop maturity metric. The growth model may incorporate one or more additional crop metrics, which can include a calculation of a growing degree unit of the crop material. In such embodiments, the control system 101 may provide the determined crop maturity metric, determined in the manner discussed herein, as an input to the crop growth model which in turn may be used to generate or define the operational plan for the working environment.

In the illustrated embodiment, the control system 101 additionally includes an output 108 which is operably coupled to a user interface 86 provided by a portable user device of an operator. Here, the control system 101 is operable to control operation of the user interface 86, e.g. through output of control signals 109 in order to cause the display operational data to the operator relating to the operation of the control system 101. Specifically, the control system 101 may be operable to utilise the user interface 86 to display to the operator a graphical representation of the crop maturity metric - e.g. an indicator illustrating an estimated bloom percentage for the crop material across the working environment or for regions within the working environment, for example. The operator may utilise this information for manually controlling or determining a timing for a relevant harvesting operation to be performed. In an extension of this, the user interface could be used to display a representation of the operational plan to the operator. In this manner, a manual element of the decision process for performing the harvesting operation may be automated to assist the operator. In some variants, the user interface 86 may also be operable to receive a user input from the operator, and in such instances the output 108 may act as an input for receiving that user input at the processor 104. The user input may relate to a requested or target parameter, for example a desired threshold bloom percentage for initiating the harvesting operation, or the like, or for the operator to advise the system of the performance of the harvesting operation, e.g. in the form of a check box for confirming performance of recommended action from the operational planning tool.

### Alternative Embodiments

The illustrated examples shown herein utilise a camera system 80 mounted or otherwise coupled to tractor 10 operating within the working environment, e.g. during performance of a spraying operation. However, it will be readily understood by the skilled person that the invention is not limited in this sense. Rather, the camera system 80 may instead be provided on an alternative machine operating within the environment, e.g. a support vehicle, or indeed on an unmanned aerial vehicle (e.g. a drone) which may obtain image data whilst flying over the working environment.

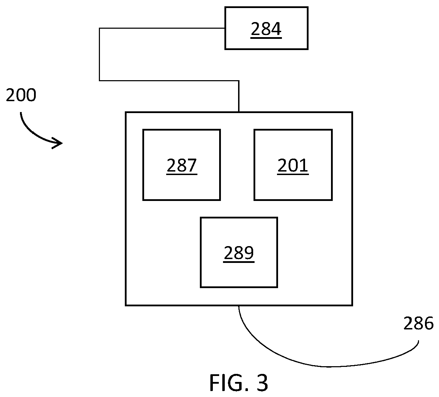

In a further example, illustrated here in FIG 3, the camera system 80 is instead provided by a camera 287 of a portable user device 286 of the operator. User device 286 can be a smartphone, for example, carried by the operator and having the camera 287 built therein. In such examples, the operator may utilise the user device 286 to obtain one or more images of the crop within the working environment. The distributed system 200 shown in FIG. 3 comprises a control system 201 which is configured in substantially the same manner as control system 101 described hereinabove. However, here the control system 201 is provided as part of the user device 286, e.g. as one or more processing units on the user device 286 and has suitable processing capabilities for performing the operational steps discussed herein, e.g. those discussed in association with control system 101 above. The camera system 287 of the user device 286 is utilised to obtain image data by the operator within the working environment. As above, the image data again includes images of crop material within the working environment which is analysed (in the same manner discussed herein) by the control system 201 to identify crop components within the image data and determine a crop maturity metric in dependence thereon. The system 200 again includes a user interface 86, here provided as a display screen 289 of the user device 286, and a remote data store 284 for receiving and/or storing data from the control system 201, which may include the image data for example. Again, as discussed herein, the remote data store 284 may further comprise stored thereon an operational plan for the working environment, which may be generated and/or updated through communication with the control system 201 and specifically in dependence on the crop maturity metric determined by the control system 201. It will be appreciated that the remote data store 284 may be a cloud server or the like, accessible utilising communication capabilities of the user device 286, and may include remote processing capability accessible by the user device 286 for reducing the processing requirements for the user device 286 for performance of the operational steps discussed herein.

In the examples discussed herein, the harvesting tasks planned or scheduled, e.g. buy the operational planning tool are all manual tasks to be performed later. In extensions to this, the control system 101, 201 may feed into an automated, or at least semi-automated control network for the working environment, and the working thereof. For example, tasks scheduled or updated in the operational plan by the operational planning tool, with input by the control system 101, 201 in the manner discussed herein, may be performed in an automated manner by autonomous working units operating in the environment. Here, the control system may be configured to control - e.g. initiate or prevent - operation of the autonomous working units in dependence on the determined crop maturity metric. This may comprise direct control of those units through communication with those machines directly, or indirectly through updating of the operational plan, the operational plan being used by a wider control network to control operation of the automatous working units.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that examples, not forming part of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device, or integrated circuits or on an optically or magnetically readable medium such as, for example, a CD, DVD, magnetic disk, or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

## Claims

1. A control system for determining a degree of maturity of crop material to be harvested in a working environment, the control system comprising one or more controllers, and being configured to:
receive image data from one or more image sensors;
analyse the image data to:
identify one or more crop components within the image data; and
determine a crop maturity metric in dependence on the identified one or more crop components, the crop maturity metric comprises a bloom percentage of the crop material;
compare the determined crop maturity metric with a threshold maturity metric; and
generate and output one or more control signals for controlling operation of one or more operable components associated with a harvesting of the crop material in dependence on the comparison;
wherein the threshold maturity metric comprises a threshold bloom percentage.

2. A control system as claimed in claim 1, wherein the one or more image sensors are mounted or otherwise coupled, in use, to an agricultural machine operating in the working environment.

3. A control system as claimed in claim 1 or claim 2, wherein the one or more image sensors are mounted or otherwise coupled, in use, to an unmanned aerial vehicle operable, in use, to obtain image data indicative of the working environment and the crop material therein.

4. A control system of any preceding claim, wherein the one or more image sensors are provided on a portable user device.

5. A control system of any preceding claim, wherein the one or more controllers are configured to initiate control of the one or more operable components in dependence on the determined crop maturity metric meeting or exceeding threshold maturity metric.

6. A control system of any preceding claim, wherein the one or more controllers are configured to prevent control of the one or more operable components in dependence on the determined crop maturity metric not meeting the threshold maturity metric.

7. A control system of any preceding claim, wherein the one or more operable components comprises a user interface; and the one or more controllers are configured to control operation of the user interface in dependence on the determined crop maturity metric.

8. A control system of claim 7, wherein the one or more controllers are operable to control generation of a graphical representation of the determined maturity metric for display by the user interface.

9. A control system of any preceding claim, wherein the one or more operable components comprise a computing system having stored thereon, or providing access to, an operational planning tool for the harvesting operation; and wherein the one or more controllers are configured to generate and/or update an operational plan for the harvesting operation in dependence on the determined crop maturity metric.

10. A control system of claim 9, wherein the operational plan comprises:
a schedule for performance of one or more operational tasks associated with the harvesting operation associated with the crop, and optionally a recommended timing for performance of the one or more operational tasks; and/or
one or more suggested operational parameters for the harvesting operation.

11. A control system of any preceding claim, wherein the one or more controllers are configured to update a crop growth model in dependence on the determined crop maturity metric.

12. An agricultural machine comprising the control system of any preceding claim.

13. A computer implemented method of determining a degree of maturity of crop material to be harvested, the method comprising:
receiving image data from one or more image sensors;
analysing the image data to:
identify one or more crop components within the image data; and
determine a crop maturity metric in dependence on the identified one or more crop components, the crop maturity metric comprising a measure indicative of a bloom percentage of the crop material;
compare the determined crop maturity metric with a threshold maturity metric; and
controlling operation of one or more operable components associated with a harvesting of the crop material in dependence on the comparison;
wherein the threshold maturity metric comprises a threshold bloom percentage.

## Patentansprüche

1. Steuersystem zum Ermitteln eines Reifegrades eines Erntematerials, das geeignet ist, um in einer Arbeitsumgebung geerntet zu werden, wobei das Steuersystem eine oder mehrere Steuereinheiten umfasst und konfiguriert ist zum:
Empfangen von Bilddaten von einem oder mehreren Bildsensoren;
Analysieren der Bilddaten zum:
Identifizieren von einer oder mehreren Erntegutkomponenten innerhalb der Bilddaten; und
Ermitteln eines Erntegutreifeindex in Abhängigkeit von der einen oder den mehreren identifizierten Erntegutkomponenten, wobei der Erntegutreifeindex einen Blütenanteil des Erntematerials umfasst;
Vergleichen des ermittelten Erntegutreifeindex mit einem Schwellenwert für den Reifeindex; und
Erzeugen und Ausgeben, in Abhängigkeit von dem Vergleich, eines oder mehrerer Steuersignale zum Steuern des Betriebs einer oder mehrerer funktionsfähiger Komponenten, die mit einem Ernten des Erntematerials assoziiert sind;
wobei der Schwellenwert für den Reifeindex einen Schwellenwert für einen Blütenanteil umfasst.

2. Steuersystem nach Anspruch 1, wobei der eine oder die mehreren Bildsensoren beim Einsatz an eine landwirtschaftliche Maschine montiert oder anderweitig gekoppelt sind, die in der Arbeitsumgebung betrieben wird.

3. Steuersystem nach Anspruch 1 oder Anspruch 2, wobei der eine oder die mehreren Bildsensoren beim Einsatz an ein unbemanntes Luftfahrzeug montiert oder anderweitig gekoppelt sind, das beim Einsatz funktionsfähig ist, um Bilddaten zu erhalten, welche die Arbeitsumgebung und das darin enthaltene Erntematerial anzeigen.

4. Steuersystem nach einem der vorhergehenden Ansprüche, wobei der eine oder die mehreren Bildsensoren an einer tragbaren Benutzervorrichtung bereitgestellt werden.

5. Steuersystem nach einem der vorhergehenden Ansprüche, wobei die eine oder mehreren Steuereinheiten konfiguriert sind, um ein Steuern der einen oder mehreren funktionsfähigen Komponenten in Abhängigkeit davon zu initiieren, dass der ermittelte Erntegutreifeindex den Schwellenwert für den Reifeindex erfüllt oder überschreitet.

6. Steuersystem nach einem der vorhergehenden Ansprüche, wobei die eine oder die mehreren Steuereinheiten konfiguriert sind, um ein Steuern der einen oder mehreren funktionsfähigen Komponenten in Abhängigkeit davon zu verhindern, dass der ermittelte Reifeindex den Schwellenwert für den Reifeindex nicht erfüllt.

7. Steuersystem nach einem der vorhergehenden Ansprüche, wobei die eine oder mehreren funktionsfähigen Komponenten eine Benutzeroberfläche umfassen; und wobei die eine oder mehreren Steuereinheiten konfiguriert sind, um die Funktion der Benutzeroberfläche in Abhängigkeit von dem ermittelten Erntegutreifeindex zu steuern.

8. Steuersystem nach Anspruch 7, wobei die eine oder mehreren Steuereinheiten funktionsfähig sind, um eine Erzeugung einer grafischen Darstellung des ermittelten Reifeindex für eine Anzeige auf der Benutzeroberfläche zu steuern.

9. Steuersystem nach einem der vorhergehenden Ansprüche, wobei die eine oder mehreren funktionsfähigen Komponenten ein Computersystem umfassen, in dem ein Betriebsplanungswerkzeug für den Erntevorgang gespeichert ist oder ein Zugriff auf selbiges bereitgestellt wird; und wobei die eine oder mehreren Steuereinheiten konfiguriert sind, um einen Betriebsplan für den Erntevorgang in Abhängigkeit von dem ermittelten Erntegutreifeindex zu erzeugen und/oder zu aktualisieren.

10. Steuersystem nach Anspruch 9, wobei der Betriebsplan umfasst:
einen Zeitplan für eine Durchführung von einer oder mehreren Betriebsaufgaben, die mit dem Erntevorgang assoziiert sind, der mit dem Erntegut assoziiert ist, und optional einen empfohlenen Zeitpunkt für die Durchführung der einen oder mehreren Betriebsaufgaben; und/oder
einen oder mehrere empfohlene Betriebsparameter für den Erntevorgang.

11. Steuersystem nach einem der vorhergehenden Ansprüche, wobei die eine oder mehreren Steuereinheiten konfiguriert sind, um ein Erntegutwachstumsmodell in Abhängigkeit von dem ermittelten Erntegutreifeindex zu aktualisieren.

12. Landwirtschaftliche Maschine, die das Steuersystem nach einem der vorhergehenden Ansprüche umfasst.

13. Computerimplementiertes Verfahren zum Ermitteln eines Reifegrades eines Erntematerials, das geeignet ist, um geerntet zu werden, wobei das Verfahren umfasst:
Empfangen von Bilddaten von einem oder mehreren Bildsensoren;
Analysieren der Bilddaten zum:
Identifizieren von einer oder mehreren Erntegutkomponenten innerhalb der Bilddaten; und
Ermitteln eines Erntegutreifeindex in Abhängigkeit von der einen oder den mehreren identifizierten Erntegutkomponenten, wobei der Erntegutreifeindex ein Maß umfasst, das einen Blütenanteil des Erntematerials anzeigt;
Vergleichen des ermittelten Erntegutreifeindex mit einem Schwellenwert für den Reifeindex; und
Steuern, in Abhängigkeit von dem Vergleich, des Betriebs einer oder mehrerer funktionsfähiger Komponenten, die mit einem Ernten des Erntematerials assoziiert sind;
wobei der Schwellenwert für den Reifeindex einen Schwellenwert für einen Blütenanteil umfasst.

## Revendications

1. Système de commande pour déterminer un degré de maturité d'un matériau de culture à récolter dans un environnement de travail, le système de commande comprenant un ou plusieurs dispositifs de commande, et étant configuré pour :
recevoir des données d'image provenant d'un ou de plusieurs capteurs d'image ;
analyser les données d'image pour :
identifier un ou plusieurs composants de culture dans les données d'image ; et
déterminer une métrique de maturité des cultures en fonction du ou des composants de culture identifiés, la métrique de maturité des cultures comprenant un pourcentage de floraison du matériau de culture ;
comparer la métrique déterminée de maturité des cultures avec un seuil de métrique de maturité ; et
générer et délivrer un ou plusieurs signaux de commande pour commander le fonctionnement d'un ou de plusieurs composants fonctionnels associés à une récolte du matériau de culture en fonction de la comparaison ;
le seuil de métrique de maturité comprenant un seuil de pourcentage de floraison.

2. Système de commande selon la revendication 1, le ou les capteurs d'image étant montés ou couplés d'une autre manière, en cours d'utilisation, à une machine agricole fonctionnant dans l'environnement de travail.

3. Système de commande selon la revendication 1 ou la revendication 2, dans lequel le ou les capteurs d'image étant montés ou couplés d'une autre manière, en cours d'utilisation, à un véhicule aérien sans équipage pouvant fonctionner, en cours d'utilisation, pour obtenir des données d'image indicatives de l'environnement de travail et du matériau de culture qui s'y trouve.

4. Système de commande selon l'une quelconque des revendications précédentes, le ou les capteurs d'image étant placés sur un dispositif portable d'utilisateur.

5. Système de commande selon l'une quelconque des revendications précédentes, le ou les dispositifs de commande étant configurés pour amorcer la commande du ou des composants exploitables en fonction du fait que la métrique déterminée de maturité des cultures atteigne ou dépasse le seuil de métrique de maturité.

6. Système de commande selon l'une quelconque des revendications précédentes, le ou les dispositifs de commande étant configurés pour empêcher la commande du ou des composants exploitables en fonction du fait que la métrique déterminée de maturité des cultures ne satisfasse pas au seuil de métrique de maturité.

7. Système de commande selon l'une quelconque des revendications précédentes, le ou les composants actionnables comprenant une interface d'utilisateur ; et le ou les dispositifs de commande étant configurés pour commander le fonctionnement de l'interface d'utilisateur en fonction de la métrique déterminée de maturité des cultures.

8. Système de commande selon la revendication 7, dans lequel le ou les dispositifs de commande pouvant fonctionner pour commander la génération d'une représentation graphique de la métrique de maturité déterminée pour affichage par l'interface d'utilisateur.

9. Système de commande selon l'une quelconque des revendications précédentes, le ou les composants exploitables comprenant un système informatique sur lequel est stocké, ou fournissant un accès à, un outil de planification opérationnelle pour l'opération de récolte ; et le ou les dispositifs de commande étant configurés pour générer et/ou mettre à jour un plan opérationnel pour l'opération de récolte en fonction de la métrique déterminée de maturité des cultures.

10. Système de commande selon la revendication 9, le plan opérationnel comprenant :
un calendrier pour la réalisation d'une ou de plusieurs tâches opérationnelles associées à l'opération de récolte associée aux cultures, et éventuellement une chronologie recommandée pour la réalisation de la ou des tâches opérationnelles ; et/ou
un ou plusieurs paramètres opérationnels suggérés pour l'opération de récolte.

11. Système de commande selon l'une quelconque des revendications précédentes, le ou les dispositifs de commande étant configurés pour mettre à jour un modèle de croissance de culture en fonction de la métrique déterminée de maturité des cultures.

12. Machine agricole comprenant le système de commande selon l'une quelconque des revendications précédentes.

13. Procédé, mis en œuvre par ordinateur, de détermination d'un degré de maturité d'un matériau de culture à récolter, le procédé comprenant :
la réception de données d'image provenant d'un ou de plusieurs capteurs d'image ;
l'analyse des données d'image pour :
identifier un ou plusieurs composants de culture dans les données d'image ; et
déterminer une métrique de maturité des cultures en fonction du ou des composants de culture identifiés, la métrique de maturité des cultures comprenant une mesure indicative d'un pourcentage de floraison du matériau de culture ;
comparer la métrique déterminée de maturité des cultures avec un seuil de métrique de maturité ; et
commander le fonctionnement d'un ou de plusieurs composants fonctionnels associés à une récolte du matériau de culture en fonction de la comparaison ;
le seuil de métrique de maturité comprenant un seuil de pourcentage de floraison.
